# FASCICULE DE BREVET EUROPEEN

(11) **EP 1 047 353 B1**
(45) Date de publication et mention de la délivrance du brevet: **14.07.2004**
(21) Numéro de dépôt: 99900529.1
(22) Date de dépôt: 13.01.1999
(51) Int. Cl.: A61C 3/03

(54) **INSTRUMENT DENTAIRE A ULTRASONS DESTINE AU TRAITEMENT DES POCHES PARODONTALES**
ZAHNÄRTZLICHES ULTRASCHALLINSTRUMENT ZUR BEHANDLUNG VON ZAHNFLEISCHTASCHEN
DENTAL ULTRASOUND INSTRUMENT FOR TREATING PERIODONTAL POCKETS

(30) Priorité: 13.01.1998 FR 9800239
(43) Date de publication de la demande: 02.11.2000
(73) Titulaire: SATELEC S.A., F-33700 Merignac (FR)
(72) Inventeur: DIERAS, Francis, F-33000 Bordeaux (FR); BENQUE, Edmond-Pierre, F-31000 Toulouse (FR)
(74) Mandataire: Bruder, Michel
(86) Numéro de dépôt international: PCT/FR1999/000049
(87) Numéro de publication internationale: WO 1999/035993

(56) Documents cités:
- EP-A- 0 028 529
- EP-A- 0 360 161
- WO-A-96/00631
- US-A- 3 645 255

## Description

La présente invention concerne un instrument dentaire à ultrasons et plus particulièrement un instrument destiné à effectuer un traitement des poches parodontales caractéristiques d'une infection du parodonte.

On sait en effet que si le tartre n'est pas en lui-même un produit pathogène, en raison de sa constitution poreuse alvéolée il constitue cependant un support apte à recevoir et favoriser le développement d'une faune microbienne.

Lorsque le tartre est déposé sur la partie subgingivale de la dent, à savoir sur l'émail de celle-ci, son retrait peut être effectué facilement à l'aide d'un instrument manuel ou d'un instrument mû par ultrasons.

Il n'en est pas de même lorsqu'il est déposé sur la partie sousgingivale de la dent, à savoir sur le cément de celle-ci, en raison de la rugosité élevée de ce dernier. Dans ce dernier cas, le tartre sousgingival favorisera la formation de la plaque dentaire qui entraînera, à terme, une maladie du parodonte, ou parodontite, qui se manifestera par la présence de la poche parodontale précédemment mentionnée. En l'absence de traitement, la parodontite conduira à une perte de l'attache de la dent et à une résorption de l'os alvéolaire. Il est donc essentiel de traiter la poche parodontale.

De manière conventionnelle, le traitement qui est effectué à pour but de nettoyer la surface de la racine de la dent afin d'en éliminer les dépôts nuisibles, et de la polir ensuite pour obtenir une surface lisse. Une telle opération, appelée surfaçage radiculaire est réalisée "à l'aveugle" pour les poches parodontales de faibles dimensions. Dans le cas contraire, on réalise un lambeau gingival qui permet d'avoir un accès direct aux surfaces radiculaires atteintes par la maladie.

Le surfaçage radiculaire en aveugle nécessite une instrumentation particulièrement adaptée en raison, d'une part, de la variété anatomique des sites concernés et de leur difficulté d'accès et, d'autre part, en raison de la fragilité des tissus rencontrés. Certains des instruments utilisés à cet effet sont de formes diverses et sont utilisés soit en traction soit en poussée. Parmi les instruments utilisés en traction on retiendra notamment les instruments de type "Crane Kaplan n° 6", "Goldman Fox n° 1" ou "Mac Call". Certains instruments du type travaillant en poussée sont constitués par des ciseaux présentant un bord tranchant droit, plat et biseauté et une lame continue (ciseaux de Zerfin 6).

Ces instruments comportent tous des zones contondantes afin de permettre une prise sur le tartre qui, en raison de la nature rugueuse du cément fait bloc avec ce dernier.

Parmi les instruments les plus utilisés pour les opérations de surfaçage radiculaire on retiendra les curettes, et notamment les curettes dites de "Gracey" qui, en raison de leur section semi-circulaire, peuvent être insérées facilement dans la plupart des zones de la denture afin d'effectuer à la fois l'opération de grattage avec leur zone acérée et l'opération de polissage avec leur zone arrondie. Ce type d'instruments présente l'inconvénient de nécessiter des affûtages périodiques nombreux. De plus, lorsque la partie contondante de la lame rencontre un morceau de tartre, il est nécessaire d'appliquer à l'instrument une force élevée qui peut s'avérer dangereuse pour les tissus environnants.

Par ailleurs, le temps nécessaire à la mise en oeuvre d'un traitement manuel au moyen des instruments ci-dessus mentionnés peut se révéler très long, et c'est la raison pour laquelle on a proposé de mécaniser cette technique opératoire en activant ces instruments au moyen de dispositifs générateurs d'ultrasons, ainsi que proposé notamment dans un brevet canadien n° 597 313.

Un autre inconvénient des instruments précédemment mentionnés est que, pour effectuer une opération de surfaçage radiculaire sur une même dent, le praticien est contraint de changer plusieurs fois d'instruments en cours d'opération, ce qui constitue à la fois une gène et une perte de temps pour celui-ci.

Si les instruments à ultrasons évitent au praticien une fatigue importante et lui autorisent, de plus, un gain de temps non négligeable, ils présentent cependant un certain nombre d'inconvénients qui sont essentiellement dus au fait que les instruments de ce type ne prennent pas en compte les données scientifiques les plus récentes en la matière.

En effet, on sait que l'opération de surfaçage radiculaire précédemment mentionnée consiste à enlever le cément et la dentine dans les endroits malades afin d'éliminer les parties de ceux-ci contenant une faune microbienne. Cette opération a malheureusement également pour effet d'induire des phénomènes d'hypersensibilité ou de pulpite à rétro et de favoriser par la suite l'adhésion des bactéries sur les endroits ainsi traités.

A l'opération de surfaçage radiculaire on semble actuellement préférer les opérations dites de débridement de la poche parodontale. Une telle opération, à la différence de la précédente, respecte l'intégralité du cément et de la dentine.

Elle consiste à ouvrir la poche parodontale, assurer le nettoyage de la racine et à réaliser l'exérèse mécanique des irritants de la surface dentaire et radiculaire. Le débridement va jusqu'aux tissus adjacents non pathologiques, bouleverse l'organisation microbienne établie pour aboutir à un état non inflammatoire des tissus. Le débridement permet de parvenir à une cicatrisation totale de la lésion par détoxication des tissus et cémento-génèse.

Une telle opération nécessite un instrument non contondant permettant de réaliser un travail de nettoyage et de lissage à la fois rapide et non agressif contrairement à l'effet de grattage-polissage obtenu avec les instruments conventionnels y compris ceux qui sont animés par les ultrasons.

Par ailleurs on sait que les instruments à ultrasons utilisés en technique dentaire sont aptes à produire un effet de cavitation que l'on met à profit pour éliminer le tartre qui se dépose sur les surfaces subgingivales de la dent. Les instruments de l'état antérieur de la technique, qui ont été précédemment décrits, se révèlent incapables, par le seul effet de la cavitation qu'ils créent, de supprimer de la racine de la dent les concrétions sousgingivales qui adhérent à celle-ci. C'est pourquoi ces instruments possèdent une partie contondante dont les effets sont destinés à s'ajouter à celui de la cavitation afin d' "usiner" en quelque sorte les concrétions à éliminer.

On connaît ainsi par le brevet US-A-3645255 une pièce à main dentaire animée par un transducteur ultrasonore, l'extrémité de cette pièce à main étant alimentée en liquide d'irrigation, cette pièce à main se terminant par une extrémité active pointue.

On connaît également par la demande PCT WO-96/00631 une pièce à main dont l'outil est mû par un transducteur ultrasonore qui comporte une zone en creux alimentée en liquide d'irrigation, l'extrémité active de cet instrument étant arrondie et les parois latérales limitant la zone en creux ayant une partie supérieure contondante.

La présente invention a pour but de proposer un instrument dentaire permettant d'effectuer l'opération de débridement d'une poche parodontale au moyen d'ultrasons faisant appel à un phénomène de cavitation amplifiée, ce qui évite au praticien tout risque de détérioration du cément et de la dentine de la dent non pathologique.

Il a été constaté que, dans certaines conditions de formes particulières d'un instrument, le phénomène de cavitation produit était suffisant pour permettre l'élimination desdites concrétions. Il a également été constaté que cet effet pouvait être obtenu à l'aide d'instruments ne présentant aucune partie contondante. Dans ces conditions le praticien est assuré de ne pas porter atteinte à l'intégrité de la racine de la dent.

On a en effet constaté qu'en créant une chambre acoustique entre l'extrémité active de l'instrument et la concrétion à éliminer déposée en surface de la dent, on amplifiait le phénomène de cavitation à un point tel que son niveau ainsi obtenu permettait de détruire rapidement ladite concrétion.

La présente invention a ainsi pour objet un instrument dentaire solidarisable d'une pièce à main apte à lui communiquer des vibrations ultrasonores, du type notamment destiné au traitement des poches parodontales et qui est formé d'au moins une branche terminée par une extrémité active, caractérisé en ce que :
- l'extrémité active comporte au moins une face pourvue d'une zone en creux s'étendant suivant l'axe longitudinal de celle-ci,
- cette zone en creux est apte à recevoir une alimentation en liquide d'irrigation,
- ladite extrémité active ne possède aucune zone contondante.

Préférentiellement les moyens d'alimentation de la zone en creux en liquide d'irrigation, feront partie intégrante de l'instrument.

L'effet de cavitation lié à la formation d'une chambre acoustique est encore accru dans la mesure où on prévoit sur la face opposée de l'instrument une seconde zone en creux, de préférence symétrique de la première par rapport à un plan, elle-même alimentée en liquide d'irrigation. Cette disposition, non seulement augmente l'effet de cavitation sur la face de la dent mais permet également au liquide d'irrigation projeté à partir de la seconde zone en creux de l'instrument, d'être propulsé par les vibrations de celui-ci sur la gencive de la dent, effectuant ainsi un nettoyage de celle-ci. On remarque alors qu'un tel instrument en cours de fonctionnement assure simultanément deux fonctions, à savoir le décrochage des concrétions par effet de cavitation amplifiée et le nettoyage du sulcus, faisant ainsi gagner du temps au praticien ce qui lui permet de passer en interproximal d'une poche parodontale à une autre.

Dans un mode de mise en oeuvre de l'invention la zone en creux aura une section droite parabolique telle que son foyer se situera sensiblement à une distance du fond de celle-ci correspondant à l'emplacement de la surface de la concrétion au cours du traitement.

Il a été constaté qu'en donnant à l'extrémité active de l'instrument, (c'est-à-dire à la partie de celui-ci susceptible de venir au contact de la dent au cours du traitement) une forme spécifique déterminée, il était possible d'assurer un traitement complet de débridement de la poche parodontale d'une dent sur toutes les faces de celle-ci, sans que le praticien ait à procéder en cours d'opération, à un changement d'instrument. En fait, en donnant à l'instrument cette forme spécifique déterminée, il est même possible, avec un seul instrument, d'effectuer l'opération susmentionnée sur l'ensemble des dents d'un patient. Dans ces conditions, non seulement le praticien bénéficie d'une plus grande rapidité de traitement et d'un plus grand confort de travail mais il réalise également des économies substantielles, dans la mesure où un seul instrument remplace les divers instruments nécessaires jusqu'à présent. L'extrémité active possédera ainsi au moins une face en forme globale de trapèze isocèle dont l'axe de symétrie se confond avec celui de la branche à laquelle elle est rattachée et dont la petite base forme la partie antérieure.

L'instrument suivant l'invention permet en outre d'améliorer la sécurité du patient dans la mesure où il ne comporte aucune arête contondante.

On décrira ci-après, à titre d'exemples non limitatifs, diverses formes d'exécution de la présente invention, en référence aux dessins annexés sur lesquels :
La figure 1 est une vue en plan d'un ensemble chirurgical comportant un instrument suivant l'invention.
La figure 2 est une vue en plan d'un exemple d'instrument dentaire suivant l'invention.
La figure 3 est une vue en coupe transversale à plus grande échelle de l'extrémité active de l'instrument dentaire représenté sur la figure 2 suivant la ligne III-III de celle-ci.
La figure 4 est une vue en coupe longitudinale à plus grande échelle de l'extrémité active de l'instrument dentaire représenté sur la figure 2 suivant la ligne IV-IV de celle-ci.
La figure 5 est une vue en coupe transversale d'une variante de mise en oeuvre de l'extrémité active d'un instrument suivant l'invention.
La figure 6 est une vue en coupe schématique d'un instrument suivant l'invention en position de travail entre le cément et la gencive d'une dent.
La figure 7 est une vue en coupe schématique d'une variante de mise en oeuvre d'un instrument suivant l'invention en position de travail entre le cément et la gencive d'une dent.
La figure 8 est une vue partielle en plan d'une variante de mise en oeuvre de l'extrémité active d'un instrument suivant l'invention.
La figure 9 est une vue en coupe longitudinale de l'instrument représenté sur la figure 8 suivant la ligne IX-IX de celle-ci.
La figure 10 est une vue en coupe transversale de l'instrument représenté sur la figure 8 suivant la ligne X-X de celle-ci.

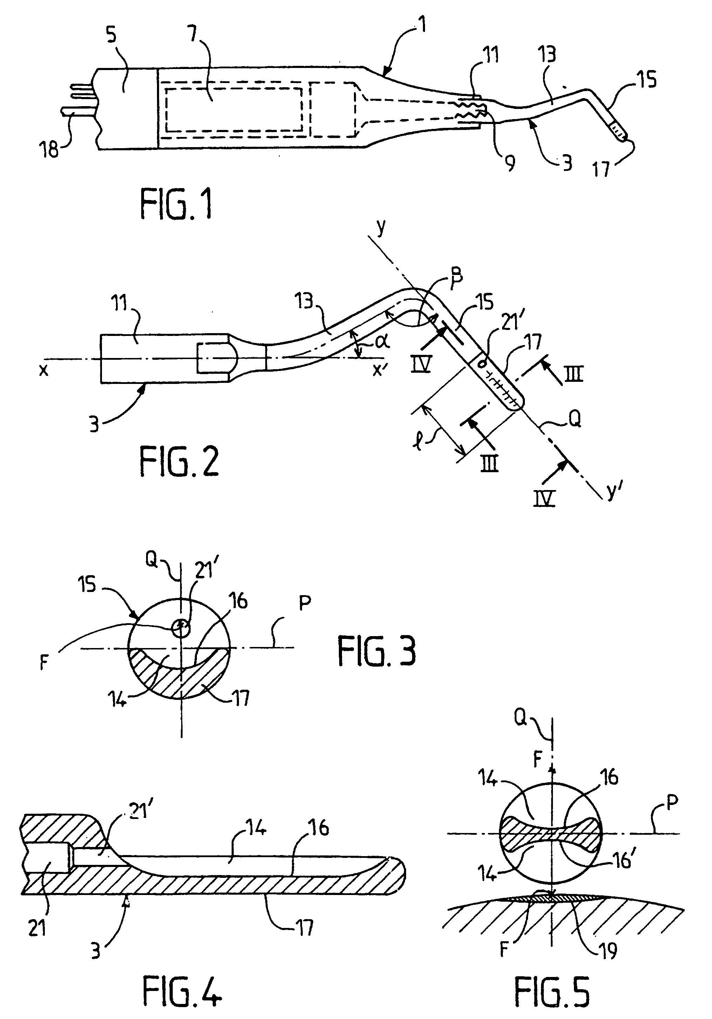

L'ensemble chirurgical représenté sur la figure 1 se compose essentiellement d'une pièce à main 1 et d'un instrument 3. La pièce à main 1 est constituée d'un boîtier cylindrique 5 qui contient un transducteur piézo-électrique 7 relié à des moyens d'alimentation en courant électrique, non représentés sur le dessin. Le transducteur 7 se termine par un embout fileté 9 sur lequel vient se visser la douille 11 de l'instrument 3.

Ce dernier, qui est représenté de façon plus détaillée sur la figure 2, se compose de la douille cylindrique 11 qui se prolonge par une branche cylindrique 13 de plus faible diamètre et dont l'axe longitudinal forme un angle α d'environ 40° avec l'axe longitudinal xx' de la douille 11. Cette première branche 13 se prolonge par une seconde branche 15, sensiblement de même longueur, qui est coudée en sens inverse et qui forme un angle β d'environ 90° avec la première branche 13. La seconde branche 15 se termine par une extrémité active 17, c'est-à-dire par une partie dont les diverses faces sont susceptibles d'être mises en contact avec les différentes zones à traiter de la dent.

L'extrémité active 17 est obtenue par usinage de la branche 15. Ainsi que représenté sur la figure 3, elle possède une section droite en forme de demi-lune dont les parties angulaires sont arrondies, formant ainsi une zone en creux 14. Le plan de symétrie Q de l'extrémité active 17 est perpendiculaire au plan P formé par les deux branches 13 et 15. La face interne 16 de la zone en creux 14 a sensiblement la forme d'un arc de cercle.

Dans un mode de mise en oeuvre de l'invention, cette face 16 peut avoir une forme parabolique, le foyer F de la parabole se situant alors à une distance de celle-ci telle qu'en position d'utilisation il se trouve sur la surface de la concrétion 19 que l'on souhaite éliminer.

On sait que le phénomène de cavitation ne peut bien entendu se produire qu'en présence d'un liquide. Celui-ci peut être apporté par des moyens externes, mais il sera préférentiellement apporté par l'instrument lui-même. Pour ce faire la pièce à main 1 possède des moyens d'alimentation 18 en liquide qui sont reliés par des moyens de communication, non représentés sur le dessin, avec un canal d'alimentation 21 prévu au centre de l'instrument 3 et qui débouche dans la zone en creux 14 de celui-ci.

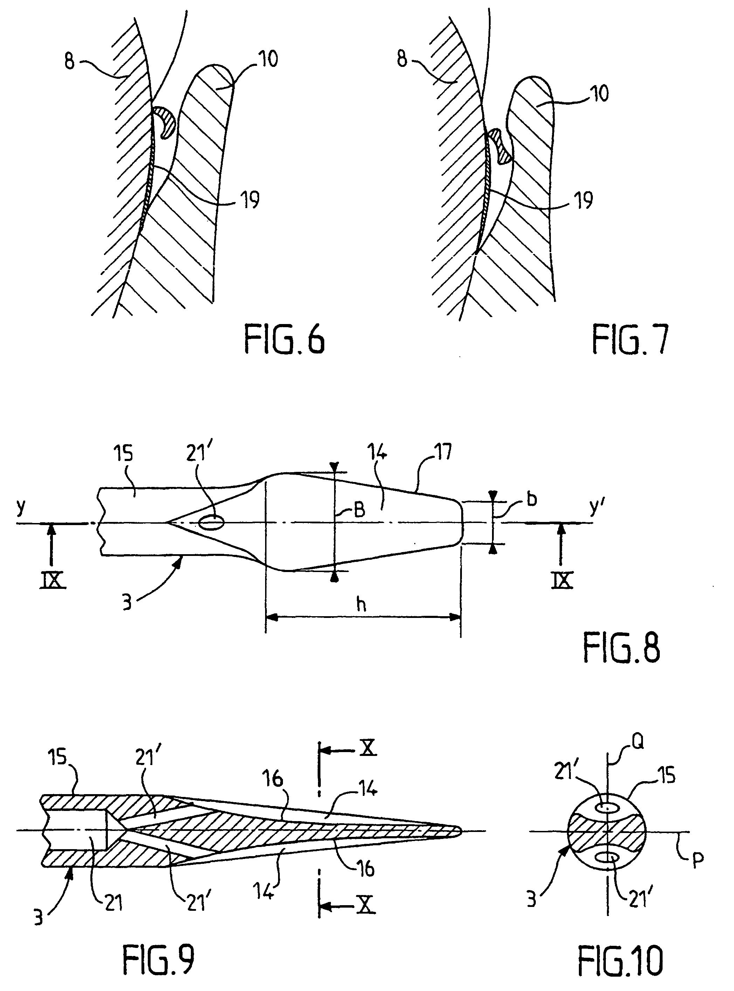

On a constaté que l'efficacité de la cavitation amplifiée était améliorée lorsque l'instrument 3 possédait deux zones en creux 14, de préférence identiques et symétriques par rapport au plan P. On a ainsi représenté sur la figure 5 un instrument du type de celui représenté sur la figure 3 mais qui de plus, est symétrique par rapport au plan P formé par les branches 13 et 15. Une telle disposition, ainsi que représenté sur la figure 7, permet au praticien, tout en attaquant les concrétions 19 avec son instrument, en disposant celui-ci de façon que l'une des parties en creux soit dirigée vers la concrétion afin de former une chambre acoustique permettant de générer une cavitation amplifiée, de réaliser un nettoyage de la gencive 10 avec la face opposée.

Dans un mode de mise en oeuvre préférentiel de l'invention représenté sur les figures 8 à 10, et afin de donner une fonction plus générale à l'instrument, c'est-à-dire de lui permettre de réaliser non seulement un traitement complet d'une dent 8 donnée, mais d'effectuer ce traitement sur l'ensemble des dents d'un patient, on a conçu une forme spécifique de son extrémité active 17 qui, globalement, c'est-à-dire en vue suivant le plan P des deux branches 13 et 15, est celle d'un trapèze isocèle dont la petite base et la grande base possèdent des angles arrondis. La grande base B du trapèze est légèrement plus importante que le diamètre de la seconde branche 15 et est de l'ordre de 2,5 mm, sa hauteur h est de l'ordre de 5 mm et sa petite base b est de l'ordre de 1 mm. Les deux parties en creux 14 de l'instrument sont symétriques par rapport au plan P défini par ses deux branches 13 et 15 et toutes les zones de l'extrémité active de l'instrument 3 sont arrondies afin qu'il n'existe aucune arête contondante.

L'instrument est traversé par un canal d'alimentation 21 qui, à proximité des zones en creux 14 de l'extrémité active 17, se sépare en deux canaux secondaires 21' de plus petit diamètre et qui sont inclinés par rapport au plan P, et qui débouchent respectivement dans la partie amont de chaque zone en creux 14, ces canaux amenant à cette dernière le liquide nécessaire à la formation du phénomène de cavitation.

## Revendications

1. Instrument dentaire solidarisable d'une pièce à main (1) apte à lui communiquer des vibrations ultrasonores, destiné au traitement des poches parodontales, et qui est formé d'au moins une branche (13,15) terminée par une extrémité active (17) comportant au moins une face pourvue d'une zone en creux (14) s'étendant suivant l'axe longitudinal (yy') de celle-ci, cette zone en creux (14) étant apte à recevoir une alimentation en liquide d'irrigation, ladite extrémité active (17) ne possèdant aucune zone contondante et comportant deux faces symétriques par rapport à un plan (P), **caractérisé en ce que**, son extrémité active possède au moins une face en forme globale de trapèze isocèle dont l'axe de symétrie se confond avec celui de la branche (15) à laquelle elle est rattachée et dont la petite base (b) forme la partie antérieure.

2. Instrument suivant la revendication 1 **caractérisé en ce qu'**il comporte des moyens d'alimentation (21,21') de la zone en creux (14) en liquide d'irrigation.

3. Instrument suivant l'une des revendications précédentes **caractérisé en ce qu'**il comporte un canal principal longitudinal (21) qui alimente en liquide d'irrigation ladite zone en creux (14).

4. Instrument suivant l'une des revendications précédentes **caractérisé en ce qu'**il est constitué d'une embase cylindrique pourvue de moyens (9,11) assurant sa fixation sur ladite pièce à main (1), qui se prolonge par une branche (13) de plus faible section qui est coudée par rapport à l'embase, et qui se prolonge elle-même par une seconde branche (15), sensiblement de même section, coudée d'environ 90° par rapport à celle-ci dans le même plan (P), et qui se termine quant à elle par ladite extrémité active de l'instrument.

5. Instrument suivant la revendication 4 **caractérisé en ce que** le plan (P) formé par les deux branches (13,15) se confond avec le plan de symétrie des deux zones en creux (14).

6. Instrument suivant l'une des revendications 3 à 5 **caractérisé en ce que** le canal principal longitudinal (21) débouche dans au moins un canal secondaire (21') de plus faible diamètre qui débouche dans ladite zone en creux (14) de l'extrémité active (17).

7. Instrument suivant la revendication 6 **caractérisé en ce que** ledit canal secondaire (21') débouche dans la partie amont de la zone en creux (14).

8. Instrument suivant l'une des revendications précédentes, **caractérisé en ce que** la section droite de la zone en creux (14) a une forme parabolique telle que le foyer de la parabole est situé à une distance du fond de celle-ci correspondant à l'emplacement de la surface à traiter.

## Patentansprüche

1. Zahnärztliches Instrument, das sich mit einem Griffstück (1), welches zur Übertragung von Ultraschallschwingungen auf dieses geeignet ist, fest verbinden lässt und zur Behandlung von parodontalen Taschen bestimmt ist und das aus wenigstens einem Arm (13, 15) gebildet ist, der in einem aktiven Ende (17) endet, das wenigstens eine Seite aufweist, die mit einer sich entlang ihrer Längsachse (yy') erstreckenden ausgehöhlten Zone (14) versehen ist, wobei die ausgehöhlte Zone (14) zum Aufnehmen einer Berieselungsflüssigkeitszuführung geeignet ist und das aktive Ende (17) keine stumpfe Zone aufweist und zwei bezüglich einer Ebene (P) symmetrische Seiten hat, **dadurch gekennzeichnet, dass** das aktive Ende wenigstens eine Seite in genereller Form eines gleichschenkligen Trapezes aufweist, dessen Symmetrieachse mit derjenigen des Armes (15), an den es anschließt, zusammenfällt, und dessen kleine Basis (b) den vorderen Teil bildet.

2. Instrument nach Anspruch 1, **dadurch gekennzeichnet, dass** es Einrichtungen (21, 21') zur Zuführung von Berieselungsflüssigkeit zur ausgehöhlten Zone (14) aufweist.

3. Instrument nach einem der vorhergehenden Ansprüche, **dadurch gekennzeichnet, dass** es einen in Längsrichtung verlaufenden Hauptkanal (21) aufweist, welcher der ausgehöhlten Zone (14) Berieselungsflüssigkeit zuführt.

4. Instrument nach einem der vorhergehenden Ansprüche, **dadurch gekennzeichnet, dass** es ein zylindrisches Ansatzstück aufweist, das mit Einrichtungen (9, 11) zu seiner Befestigung am Griffstück (1) versehen ist und eine Verlängerung in Form eines Armes (13) von geringerem Querschnitt hat, der bezüglich des Ansatzstückes abgewinkelt ist und der sich seinerseits in einen zweiten Arm (15) von im wesentlichen gleichen Querschnitt fortsetzt, welcher in derselben Ebene (P) um ungefähr 90° bezüglich des ersteren abgewinkelt ist und im aktiven Ende des Instrumentes endet.

5. Instrument nach Anspruch 4, **dadurch gekennzeichnet, dass** die durch die beiden Arme (13, 15) gebildete Ebene (P) mit der Symmetrieebene zweier ausgehöhlter Zonen (14) zusammenfällt.

6. Instrument nach einem der Ansprüche 3 bis 5, **dadurch gekennzeichnet, dass** der in Längsrichtung verlaufende Hauptkanal (21) in wenigstens einen sekundären Kanal (21') von geringerem Durchmesser mündet, welcher in die ausgehöhlte Zone (14) des aktiven Endes (17) mündet.

7. Instrument nach Anspruch 6, **dadurch gekennzeichnet, dass** der sekundäre Kanal (21') in den in Strömungsrichtung vorderen Teil der ausgehöhlten Zone (14) mündet.

8. Instrument nach einem der vorhergehenden Ansprüche, **dadurch gekennzeichnet, dass** der Querschnitt der ausgehöhlten Zone (14) parabolische Form hat, derart, dass sich der Brennpunkt der Parabel von deren tiefstem Punkt um eine Strecke entfernt befindet, welche dem Platzierungort der zu behandelnden Oberfläche entspricht.

## Claims

1. Dental instrument connectable to a handpiece (1) adapted to communicate thereto ultrasonic vibrations, intended for the treatment of periodontal pockets, and which is formed by at least one arm (13, 15) terminating in an active end (17) comprising at least one face provided with a hollow zone (14) extending along the longitudinal axis (yy') thereof, this hollow zone (14) being adapted to receive a supply of irrigation liquid, said active end (17) not presenting any contusive zone and comprising two symmetrical faces with respect to a plane (P), **characterized in that** its active end presents at least one face substantially in the form of an isosceles trapezium of which the axis of symmetry merges with that of the arm (15) to which it is attached and of which the small base (b) forms the anterior part.

2. Instrument according to Claim 1, **characterized in that** it comprises means (21, 21') for supplying the hollow zone (14) with irrigation liquid.

3. Instrument according to one of the preceding Claims, **characterized in that** it comprises a longitudinal principal channel (21) which supplies said hollow zone (14) with irrigation liquid.

4. Instrument according to one of the preceding Claims, **characterized in that** it is constituted by a cylindrical base provided with means (9, 11) ensuring its fixation on said handpiece (1), which extends in an arm (13) of smaller section which is bent with respect to the base, and which itself extends in a second arm (15) substantially of the same section, bent by about 90° with respect to the latter in the same plane (P), and which itself terminates in said active end of the instrument.

5. Instrument according to Claim 4, **characterized in that** the plane (P) formed by the two arms (13, 15) merges with the plane of symmetry of the two hollow zones (14).

6. Instrument according to one of Claims 3 to 5, **characterized in that** the longitudinal principal channel (21) opens out in at least one secondary channel (21') of smaller diameter which opens out in said hollow zone (14) of the active end (17).

7. Instrument according to Claim 6, **characterized in that** said secondary channel (21') opens out in the upstream part of the hollow zone (14).

8. Instrument according to one of the preceding Claims, **characterized in that** the cross section of the hollow zone (14) has a parabolic form such that the focus of the parabola is located at a distance from the bottom of the latter corresponding to the location of the surface to be treated.
